Europäisches Patentamt

European Patent Office

Office européen des brevets

(19)

(11) Veröffentlichungsnummer: **0 213 311**
**B1**

(12) **EUROPÄISCHE PATENTSCHRIFT**

(45) Veröffentlichungstag der Patentschrift:
**11.04.90**

(51) Int. Cl.⁴: **H04N 17/00**

(21) Anmeldenummer: **86108843.3**

(22) Anmeldetag: **28.06.86**

(54) **Schaltungsanordnung zur Kreiserzeugung und Kreiszentrierung in einem elektronisch erzeugten Gittertestbild.**

(30) Priorität: **30.08.85 DE 3531064**

(43) Veröffentlichungstag der Anmeldung:
**11.03.87 Patentblatt 87/11**

(45) Bekanntmachung des Hinweises auf die Patenterteilung:
**11.04.90 Patentblatt 90/15**

(84) Benannte Vertragsstaaten:
**AT CH DE FR GB IT LI**

(56) Entgegenhaltungen:
**DE-A- 1 924 327**

**FUNK-TECHNIK, Nr. 9, 1969, Berlin-Borsigwalde, M. HENNINGER "PAL-Farbservicegenerator "FG21" "**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth/Bay.(DE)**

(72) Erfinder: **Hahn, Harald, Dipl.-Ing., Kulmbacher Strasse 8A, D-8507 Oberasbach(DE)**

**Beschreibung**

Die Erfindung bezieht sich auf eine Schaltungsanordnung zur Kreiserzeugung und Kreiszentrierung in einem elektronisch erzeugten Gittertestbild gemäß dem Oberbegriff des Patentanspruchs 1 bzw. 5.

Für Prüf-, Meß- und Abgleicharbeiten an (Farb) Fernsehgeräten wird in vielen Fällen ein elektronisch erzeugtes Testbild herangezogen, das vom Fernsehsender abgestrahlt oder von sogenannten Farb- bzw. Videogeneratoren geliefert wird. Die Farb- bzw. Videogeneratoren eignen sich dabei wegen ihrer vielfältigen einstellbaren Bildmuster insbesondere für den Einsatz in Werkstatt, Prüffeld und Labor sowie wegen ihrer Handlichkeit und einiger spezieller Prüfsignale auch für einen rationellen Außenservice.

Wichtige, meist über Drucktasten einfach wählbare Bildmuster der Farb- bzw. Videogeneratoren sind dabei der Kreis zur Beurteilung der Geometrie und Bildlage des zu prüfenden Fernsehgerätes sowie das Gitter zum Abgleich der dynamischen und statischen Konvergenz, der Bildgeometrie, der Fokussierung und der Kissenentzerrung. Zur Beurteilung aller genannten Parameter wird das Gitter zusammen mit dem Kreis herangezogen.

Bei der Erzeugung des Kreisringes geht man von der Tatsache aus, daß auf dem Bildschirm des Fernsehgerätes eine Kreisfläche entsteht, wenn parabelförmige Signale mit Vertikal- und Horizontalfrequenz addiert werden und ein schmales Amplitudengebiet bei einem bestimmten Pegel dieses Gemisches als Videosignal benutzt wird. Sorgt man dafür, daß nur beim Durchlaufen dieses bestimmten Pegels ein kurzer Impuls als Videosignal abgeleitet wird, dann ergibt sich anstelle der Kreisfläche ein Kreisring. Eine parabelförmige Spannung wird durch Integration einer Sägezahnspannung erhalten, und diese wiederum durch Integration einer Rechteckspannung. Deshalb wird der horizontalfrequente Ausgangsimpuls einer Miller-Integrator-Stufe und das somit erzeugte Sägezahnsignal einem zweiten Integrator zugeführt, an dessen Ausgang die Horizontalparabel abgenommen werden kann. In ähnlicher Weise gewinnt man aus dem vertikalfrequenten Ausgangspuls BA über zwei Integratoren die Vertikalparabel. Vertikal- und Horizontalparabel werden überlagert und als Gemisch in einem Komparator mit einer den Kreisdurchmesser bestimmenden Gleichspannung verglichen. Bei Spannungsgleichheit wird ein kurzer Impuls als Signal für einen Kreispunkt abgegeben.

Der Erfindung liegt die Aufgabe zugrunde, eine Schaltungsanordnung zur Kreiserzeugung und Kreiszentrierung in einem elektronisch erzeugten Gittertestbild anzugeben, mit der insbesondere bei unterschiedlichen Fernsehzeilennormen und Vertikalfrequenzen der erzeugte Kreis unabhängig von der Norm und von der Lage der Gitterlinien des Testbildes immer die gleichen vorgegebenen Kreuzungspunkte schneidet, wobei das Gitter durch entsprechende Signalverarbeitung in jeder Norm quadratisch bleibt.

Diese Aufgabe wird erfindungsgemäß mit den im kennzeichnenden Teil des Patentanspruchs 1 bzw. 5 angegebenen Maßnahmen gelöst.

Vorteilhafte Weiterbildungen der erfindungsgemäßen Schaltungsanordnung ergeben sich aus den Unteransprüchen 2 bis 4 und 6.

Mit der Erfindung wird elektronisch ein Testbild mit einem Kreis erzeugt, der bei jeder beliebigen Fernsehzeilennorm/Vertikalfrequenz entsteht und immer zum Gitter des Testbildes paßt, d. h. er schneidet immer vorgegebene Kreuzungspunkte.

Ein Ausführungsbeispiel der Erfindung ist in der Zeichnung näher erläutert. Es zeigen

Fig. 1 eine Schaltungsanordnung nach dem Stand der Technik zur Erzeugung einer parabelförmigen Spannung,
Fig. 2 eine Schaltungsanordnung gemäß der Erfindung für eine Kreiserzeugung bei unterschiedlichen Fernsehzeilennormen,
Fig. 3 ein Prinzipschaltbild einer erfindungsgemäßen Schaltungsanordnung für eine Selbstzentrierung des erzeugten Kreises an das Gitter und
Fig. 4 Oszillogramme zum Prinzipschaltbild nach Fig. 3.

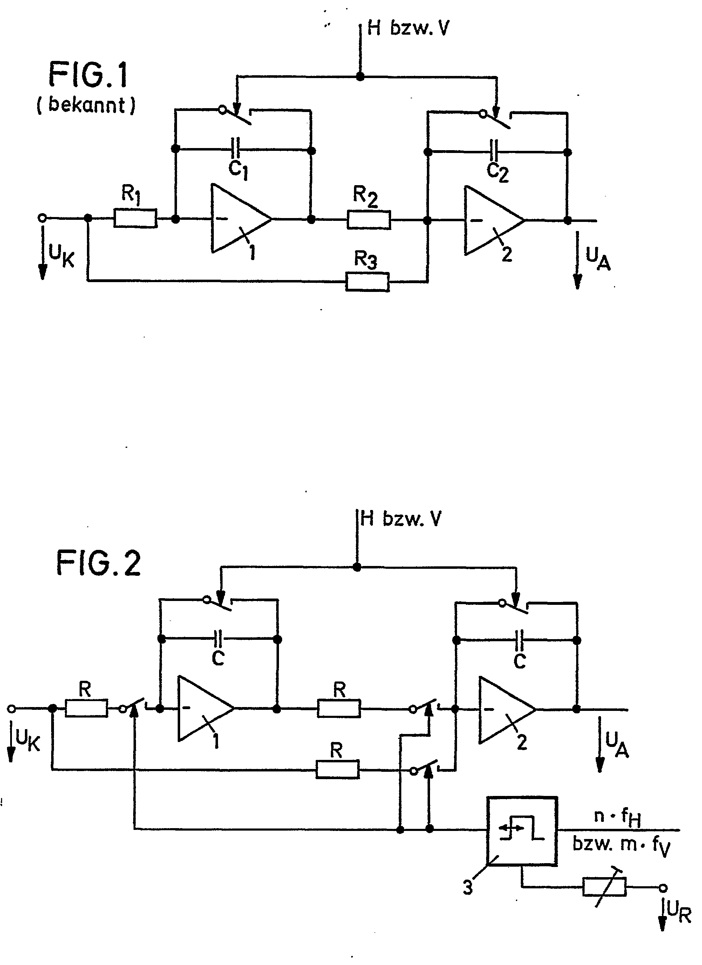

Bei der Erfindung wird ausgegangen von der bekanntesten Art der Erzeugung eines Testbildkreises, wobei die Addition einer quadratischen Funktion in Abhängigkeit von der Horizontalfrequenz und einer quadratischen Funktion in Abhängigkeit von der Vertikalfrequenz einen Kreis ergibt. Die Parabeln werden durch zweimalige Integration aus einer Gleichspannung erzeugt, wobei die Integratoren von Horizontal- bzw. Vertikalimpulsen zurückgesetzt werden. Dies ist in Fig. 1 näher dargestellt, wo zwei als Umkehrintegratoren geschaltete Operationsverstärker 1 und 2 vorgesehen sind, die von Horizontal- bzw. Vertikalimpulsen (H bzw. V) gesteuert werden.

Die allgemeine Gleichung für eine nach unten geöffnete und durch Null gehende Parabel ist

$$U_A = -at^2 + bt \qquad (1),$$

die Nullstellen hat bei

$$t_{0_1} = 0 \quad \text{und} \quad t_{0_2} = \frac{b}{a}.$$

Maxima ergeben sich bei

$$t_{max} = \frac{b}{2a} = \frac{t_{0_2}}{2},$$

während sich die maximale Ausgangsspannung bei

$$\frac{t_{0_2}}{2}$$

ergibt zu

$$U_{A\ max} = \frac{b^2}{4a}.$$

Bei einer Schaltung nach Fig. 1 ergibt sich beispielsweise die Ausgangsspannung zu

$$U_A = \frac{U_K}{2\ \tau_1 \cdot \tau_2} t^2 - \frac{R_2 \cdot U_K}{R_3 \cdot \tau_2} t \qquad (2),$$

mit den Zeitkonstanten

$$\tau_1 = R_1 \cdot C_1 \text{ und } \tau_2 = R_2 \cdot C_2.$$

Die Gleichung (2) hat Nullstellen bei

$$t_{0_1} = 0 \quad \text{und} \quad t_{0_2} = \frac{2R_2}{R_3} \tau_1.$$

Aus der zweiten Nullstelle ist erkennbar, daß die zeitliche Lage der Parabel unabhängig von der Eingangsspannung $U_K$ ist. Die maximale Ausgangsspannung für die Gleichung (2) ergibt sich zu

$$U_{A\ max} = -\frac{1}{2} \cdot \frac{\tau_1}{\tau_2} \cdot \left(\frac{R_2}{R_3}\right)^2 \cdot U_K,$$

was zeigt, daß die Amplitude von allen Komponenten abhängig ist.

Für eine Parabelerzeugung bei unterschiedlichen Zeilennormen bedeutet dies, daß bei veränderbaren Elementen $\tau_1$, $R_2$ oder $R_3$ sich die Zeit $t_{0_2}$ ändert, jedoch auch gleichzeitig die Amplitude.

Wird $R_1 = R_2 = R_3 = R$ und $C_1 = C_2 = C$ gesetzt, so ergibt sich bei $\tau = R \cdot C$ der Wert für die zweite Nullstelle zu $t_{0_2} = 2\tau$ und der Wert für die maximale Ausgangsspannung $U_{A\ max} = -\frac{1}{4} \cdot U_K$.

Dies bedeutet, daß die Amplitude der Parabel nur abhängt von der Spannung $U_K$, die zweite Nullstellung jedoch durch die Zeitkonstante $\tau = R \cdot C$ beeinflußt werden kann. Dies wiederum bedeutet, daß bei der vorstehenden Spezialisierung entweder alle drei Widerstände oder alle beiden Kondensatoren der Schaltung im gleichen Verhältnis verändert werden müssen, um eine Parabel mit veränderbarer Nullstelle $t_0$, jedoch konstanter Scheitelspannung $-\frac{1}{4} U_K$ zu erhalten.

Da es schwierig ist, drei Widerstände mit guten Gleichlaufeigenschaften linear zu regeln, wird erfindungsgemäß eine Steuerung mit "geschalteten" Widerständen gewählt, d. h. ein Analogschalter wird periodisch mit einer höheren Frequenz als der Parabel-Wiederholfrequenz geöffnet und geschlossen, wobei das Tastverhältnis veränderbar ist. Der Gleichlauf hängt bei dieser Schaltungsart nur von der Differenz der ON-Widerstände und der Schaltzeitdifferenz der Schalter untereinander ab.

Eine Schaltung hierfür zeigt Figur 2, bei der in Weiterbildung zur Schaltung nach Figur 1 ein von einem Vielfachen der Horizontal- bzw. Vertikalfrequenz angesteuerter elektronischer Schalter 3 die invertierenden Eingänge der Integratoren 1, 2 steuert. Damit die Parabel nicht zu sehr verformt wird, wird die Schaltfrequenz als ein ganzzahliges Vielfaches der Parabel-Wiederholfrequenz gewählt.

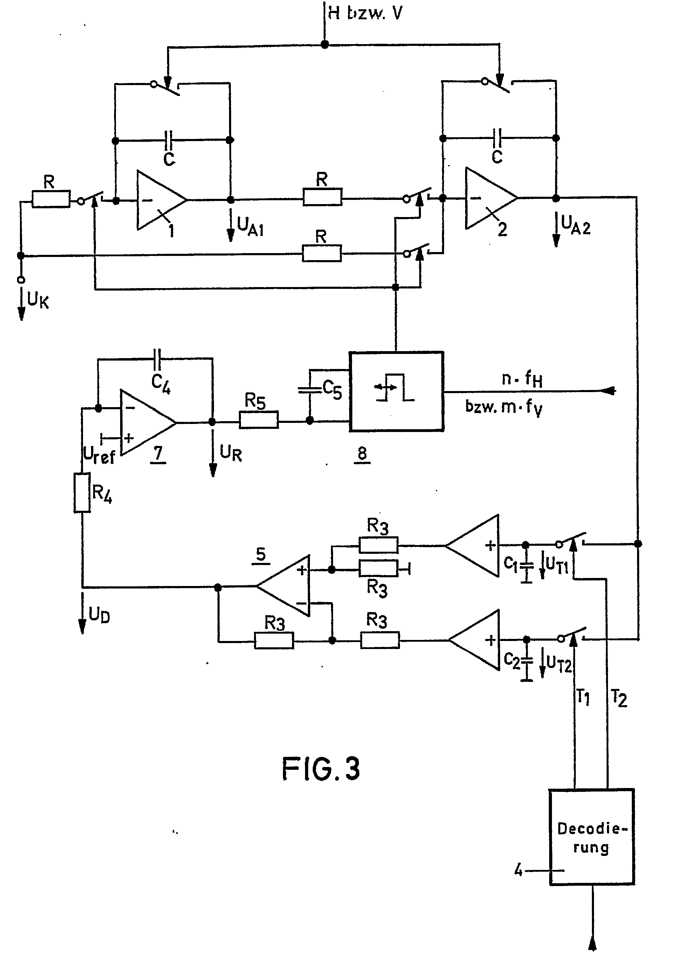

Figur 3, die ein Prinzipschaltbild einer erfindungsgemäßen Parabelerzeugung mit Regelung zur Zentrierung an ein Gitter für einen Parabelzweig zeigt, unterscheidet sich von der Schaltung nach Figur 2 durch eine zusätzlich vorgesehene Decodierschaltung 4, einen Differenzverstärker 5, den Vergleich mit einer Referenzspannung $U_{REF}$, einen weiteren Integrator 7 (Regler mit integralem Verhalten) und einem monostabilen Multivibrator 8 als elektronischen Schalter, dessen Pulsbreite vom Regler 7 gesteuert wird.

Damit der Kreis unabhängig von der Norm und von der Lage der Gitterlinien immer die gleichen vorgegebenen Kreuzungspunkte schneidet, wird die Parabel mit Impulsen, die aus den horizontalen bzw. vertikalen Gitterlinien abgeleitet werden und zeitlich links und rechts vom Scheitelpunkt der Parabel liegen, abgetastet (Decodierungsschaltung 4), aus paarweise zusammengehörenden Abtastwerten $U_{T1}$ und $U_{T2}$ wird die Differenz gebildet (Differenzverstärker 5), die Differenzspannung mit einer Referenzspannung verglichen und über den Regler 7 die Pulsbreite des monostabilen Multivibrators (8) beeinflußt. Bei korrekter Lage der Parabel zum Gitter muß der Parabelscheitel mittig zu den Abtastimpulsen liegen. Regelt man auf diese Art und Weise sowohl die Vertikal- als auch die Horizontalparabel, so paßt sich der Kreis einem vorgegebenen Gitter an und schneidet dieses an den entsprechenden Kreuzungspunkten. D. h., die gewonnene Spannung beeinflußt die Integrationsglieder über das Tastverhältnis der elektronischen Schalter derart, daß der elektronisch erzeugte Kreis bestimmte Kreuzungspunkte der Gitterlinien schneidet, wobei je nach Norm auch Gitter, Zeitkonstanten und Kreisdurchmesser (Betriebsspannung) unterschiedlich eingestellt bzw. umgeschaltet werden.

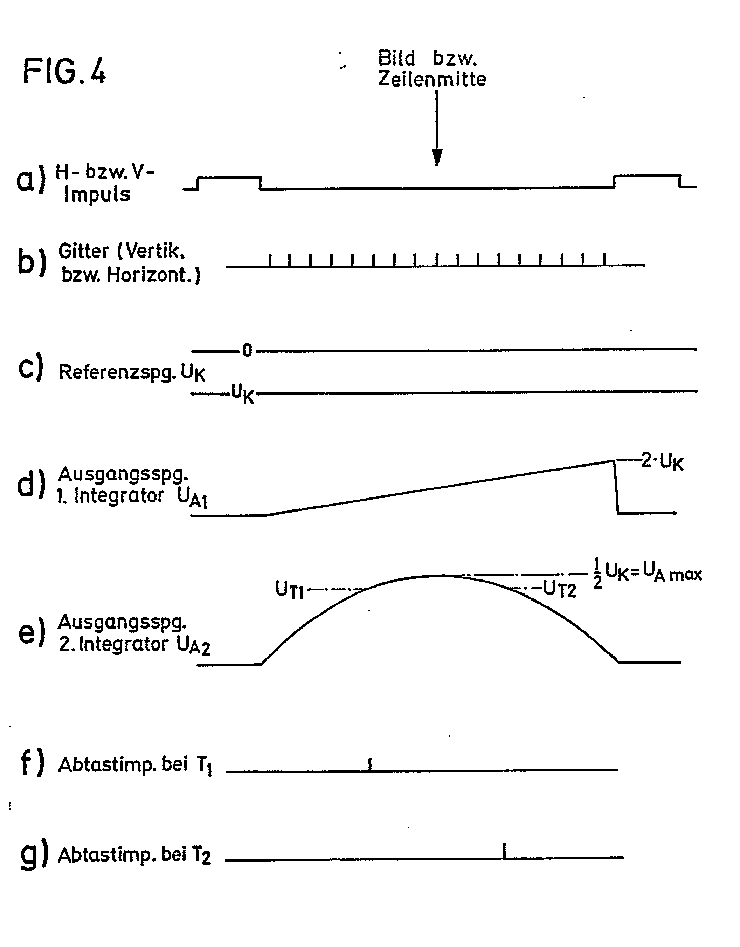

Figur 4 zeigt Oszillogramme zum Prinzipschaltbild nach Figur 3. Das Diagramm a) zeigt dabei die H- bzw. V-Impulse, während in b) die vertikalen bzw. horizontalen Gitterimpulse dargestellt sind. Diagramm c) zeigt die Referenzspannung $U_K$, Diagramm d) die Ausgangsspannung $U_{A1}$ des ersten Integrators und Diagramm e) die Ausgangsspannung $U_{A2}$ des zweiten Integrators mit den Spannungswerten $U_{T1}$ und $U_{T2}$ für die Abtastimpulse T1 bsw. T2 gemäß den Diagrammen f) bzw. g).

## Patentansprüche

1. Schaltungsanordnung zur Kreiserzeugung in einem elektronisch erzeugten Gittertestbild, insbesondere bei unterschiedlichen Fernsehzeilennormen und Vertikalfrequenzen, wobei die Videoimpulse für den Kreis mittels einer vertikal- und einer horizontalfrequenten parabelförmigen Spannung aus einer Rechteckspannung durch jeweils doppelte Integration erzeugt werden und wobei die parabelförmige Spannung als quadratische Funktion der Zeit eine konstante Scheitelspannung und eine durch Zeitkonstantenänderung veränderbare zweite Nullstelle aufweist, **dadurch gekennzeichnet,** daß die in den Integrationsgliedern benutzten Widerstände mit je einem elektronischen Schalter derart in Reihe geschaltet sind, daß zur Zeitkonstantenänderung der Schalter mit einer gegenüber der Parabel-Wiederholfrequenz höheren Frequenz und mit von der gewünschten Zeitkonstante abhängigem veränderbarem Tastverhältnis geschaltet wird und damit der wirksame Wert der die Integration bestimmenden Widerstände verändert wird.

2. Schaltungsanordnung nach Anspruch 1, **dadurch gekennzeichnet,** daß die Schaltfrequenz ein ganzzahliges Vielfaches der Parabel-Wiederholfrequenz (n . $f_H$ bzw. m . $f_V$) ist.

3. Schaltungsanordnung nach Anspruch 1 oder 2, mit zwei von Horizontal- bzw. Vertikalimpulsen angesteuerten Integratoren, **dadurch gekennzeichnet,** daß die Integratoren als Operationsverstärker (1, 2) ausgebildet sind und ein von einem Vielfachen der Horizontal- bzw. Vertikalfrequenz angesteuerter elektronischer Schalter (3) die invertierenden Eingänge der als Umkehrintegratoren geschalteten Operationsverstärker (1, 2) steuert.

4. Schaltungsanordnung nach Anspruch 1, 2 oder 3, **dadurch gekennzeichnet,** daß der Schalter ein Analogschalter ist.

5. Schaltungsanordnung zur Zentrierung des nach Anspruch 1 erzeugten Kreises an ein. Testbild-Gitter nach unterschiedlichen Fernsehzeilennormen und Vertikalfrequenzen, **dadurch gekennzeichnet,** daß die Spannungsparabel mit zeitlich beiderseits des Scheitelpunktes der Parabel liegenden und aus den Testbild-Gitterlinien abgeleiteten Impulsen abgetastet wird, aus paarweise zusammengehörenden Abtastwerten die Differenz gebildet und mit einer Referenzspannung verglichen wird und die dabei gewonnene Spannung die Integrationsglieder über das Tastverhältnis der elektronischen Schalter (3) derart beeinflußt, daß der elektronisch erzeugte Kreis bestimmte Kreuzungspunkte der Gitterlinien schneidet.

6. Schaltungsanordnung nach Anspruch 5, **gekennzeichnet durch**
a) eine Decodierschaltung (4), die Impulse in Abhängigkeit von den horizontalen bzw. vertikalen Testbild-Gitterlinien erzeugt und die Spannungsparabel mit diesen Impulsen abtastet,

b) einen Differenzverstärker (5) für die Abtastspannungen,
c) eine Vergleichsschaltung (7), die die Differenzspannung mit einer Referenzspannung vergleicht,
d) einen Regler (7) mit integrierendem Verhalten und
e) einen als elektronischen Schalter vorgesehenen monostabilen Multivibrator (8), dessen Pulsbreite vom Regler gesteuert wird.

## Claims

1. Circuit arrangement for generating a circle in an electronically generated grating test pattern, particularly for different television line standards and vertical frequencies, the video pulses for the circle being generated by double integration in each case from a rectangular voltage by means of a vertical- and a horizontal-frequency parabolic voltage and the parabolic voltage having a constant crest voltage as a quadratic function of time and a second null which can be changed by changing the time constant, characterized in that the resistors used in the integration sections are connected in series with one electronic switch each in such a manner that, for changing the time constant, the switch is switched at a frequency which is higher compared with the repetition frequency of the parabolic and at a variable duty ratio which depends on the required time constant and by this means the effective value of the resistors determining the integration is changed.

2. Circuit arrangement according to Claim 1, characterized in that the switching frequency is an integral multiple of the repetition frequency of the parabolic ($n \cdot f_H$ and $m \cdot f_v$, respectively).

3. Circuit arrangement according to Claim 1 or 2, comprising two integrators which are controlled by horizontal and vertical pulses, respectively, characterized in that the integrators are constructed as operational amplifiers (1, 2) and an electronic switch (3) controlled by a multiple of the horizontal and vertical frequency controls the inverting inputs of the operational amplifiers (1, 2) which are connected as inversion integrators.

4. Circuit arrangement according to Claim 1, 2 or 3, characterized in that the switch is an analog switch.

5. Circuit arrangement for centring the circle, generated in accordance with Claim 1, to a test pattern grating in accordance with different television line standards and vertical frequencies, characterized in that the voltage parabolic is sampled by means of pulses located on both sides of the crest of the parabolic in time and derived from the test pattern grating lines, the difference is formed from samples belonging together in pairs and is compared with a reference voltage and the voltage obtained during this process influences the integration sections via the duty ratio of the electronic switches (3) in such a manner that the electronically generated circle intersects particular points of intersection of the grating lines.

6. Circuit arrangement according to Claim 5, characterized by
a) a decoding circuit (4) which generates pulses in dependence of the horizontal and vertical test pattern grating lines and samples the voltage parabolic by means of these pulses,
b) a difference amplifier (5) for the sampling voltages,
c) a comparison circuit (7) which compares the difference voltage with a reference voltage,
d) a controller (7) with integrating characteristic and
e) a monostable multivibrator (8) which is provided as electronic switch, the pulse width of which is controlled by the controller.

## Revendications

1. Montage pour produire un cercle dans une mire en forme de grille produite par voie électronique, notamment pour des normes de lignes de télévision et des fréquences verticales différentes, et dans lequel les impulsions vidéo pour le cercle sont produites au moyen d'une tension de forme parabolique possédant la fréquence verticale et d'une tension de forme parabolique possédant la fréquence horizontale à partir d'une tension rectangulaire au moyen d'une intégration respectivement double, et dans lequel la tension en forme de parabole possède, en tant que fonction quadratique du temps, une tension crête constante et un point d'annulation pouvant être modifié au moyen d'une modification de la constante de temps, caractérisé en ce que les résistances utilisées dans les circuits d'intégration sont branchées en série avec des interrupteurs électroniques respectifs de telle sorte que, pour la modification de la constante de temps, l'interrupteur est actionné avec une fréquence supérieure à la fréquence de répétition de la parabole et avec un taux d'impulsions modifiable, qui dépend de la constante de temps désirée, et que, de ce fait, la valeur effective des résistances déterminant l'intégration est modifiée.

2. Montage selon la revendication 1, caractérisé en ce que la fréquence d'actionnement est un multiple entier de la fréquence de répétition de la parabole ($n \cdot f_H$ ou $m \cdot f_v$).

3. Montage selon la revendication 1 ou 2, comportant deux intégrateurs commandés par des impulsions horizontales ou des impulsions verticales, caractérisé par le fait que les intégrateurs sont réalisés sous la forme d'amplificateurs opérationnels (1, 2) et qu'un interrupteur électronique (3), commandé par un multiple de la fréquence horizontale ou de la fréquence verticale, commande les entrées inverseuses des amplificateurs opérationnels (1, 2) branchés en tant qu'intégrateurs inverseurs.

4. Montage selon la revendication 1, 2 ou 3, caractérisé en ce que l'interrupteur est un interrupteur analogique.

5. Montage pour centrer le cercle produit selon la revendication 1 dans une grille formant mire, conformément à différentes normes de lignes de télévision et à différentes fréquences verticales, caractérisé en ce que la parabole de la tension est échantillonnée à l'aide d'impulsions situées, dans le temps, des deux côtés du sommet de la parabole et dérivées des traits de la grille formant mire, que la différence entre les valeurs d'échantillonnage associées par couples est formée et est comparée à une tension de référence et que la tension obtenue agit sur les circuits d'intégration par l'intermédiaire du taux d'impulsions des interrupteurs électroniques (3) de telle sorte que le cercle produit par voie électronique recoupe les traits de la grille en des points d'intersection déterminés.

6. Montage selon la revendication 5, caractérisé par

a) un circuit décodeur (4), qui produit des impulsions en fonction des lignes horizontales ou verticales de la grille formant mire et échantillonne la parabole de la tension à l'aide de ces impulsions,

b) un amplificateur différentiel (5) pour les tensions d'échantillonnage,

c) un circuit comparateur (7), qui compare la tension différentielle à une tension de référence,

d) un régulateur (7), qui possède un comportement d'intégration, et

e) un multivibrateur monostable (8), qui est prévu en tant qu'interrupteur électronique et dont la durée des impulsions est commandée par le régulateur.

FIG.1
( bekannt )

FIG.2

EP 0 213 311 B1

FIG. 3

FIG. 4

Bild bzw.
Zeilenmitte

a) H- bzw. V-
Impuls

b) Gitter (Vertik.
bzw. Horizont.)

c) Referenzspg. $U_K$

$0$

$U_K$

d) Ausgangsspg.
1. Integrator $U_{A1}$

$2 \cdot U_K$

e) Ausgangsspg.
2. Integrator $U_{A2}$

$U_{T1}$

$U_{T2}$

$\frac{1}{2} U_K = U_{A\,max}$

f) Abtastimp. bei $T_1$

g) Abtastimp. bei $T_2$